# EUROPEAN PATENT APPLICATION

(11) **EP 4 617 128 A1**
(43) Date of publication of application: **17.09.2025**
(21) Application number: 23890678.8
(22) Date of filing: 09.11.2023
(51) Int. Cl.: B60W 10/06, B60W 10/119, B60W 50/00, B60W 50/02

(54) **VEHICLE AND VEHICLE CONTROL METHOD**

(30) Priority: 15.11.2022 CN 202211425177
(71) Applicant: Great Wall Motor Company Limited, Baoding, Hebei 071000 (CN)
(72) Inventor: YANG, Yaguang, Baoding, Hebei 071000 (CN)
(74) Representative: Michalski Hüttermann & Partner Patentanwälte mbB
(86) International application number: PCT/CN2023/130636
(87) International publication number: WO 2024/104242

(57) **Abstract**

A vehicle and a vehicle control method are provided. The vehicle comprises a transfer case (202), a differential lock (203), an engine controller (204), and a transmission drive controller (201). The transmission drive controller (201) receives control signals sent by the engine controller (204). When the received control signals comprise a motor rotation control signal and a motor drive current control signal, according to the motor rotation control signal and the motor drive current control signal, a motor of the transfer case (202) is controlled to rotate to a target position; when the received control signals comprise a differential lock control signal and a differential lock drive current control signal, a drive current in a coil of the differential lock is controlled according to the differential lock control signal and the differential lock drive current control signal. By cooperation between the transmission drive controller (201) and the engine controller (204), the transfer case (202) and the differential lock (203) can be controlled.

## Description

The present invention claims priority to Chinese Patent Application No. 202211425177.7, filed with CNIPA on November 15, 2022 and entitled "Vehicle and Vehicle Control Method".

### TECHNICAL FIELD

The present application relates to the technical field of vehicle control, in particular to a vehicle and a vehicle control method.

### BACKGROUND

As an important transmission component in a longitudinal four-wheel drive vehicle, a transfer case outputs the transmission input torque to front and rear axles to realize the four-wheel drive function of a vehicle. In the prior art, switching between two-wheel drive and four-wheel drive is controlled by a transfer case control unit. A differential lock is a locking mechanism in a differential of the front axle or the rear axle of a vehicle, and the differential can allow left and right wheels to rotate at different speeds. When the wheels turn, the left and right wheels of the vehicle rotate at different speeds, thereby ensuring smoothness of the vehicle when turning. However, when one of the wheels is idling, the other wheel on a good road surface also gets no torque, and the vehicle loses its driving power. At this time, the control unit of the differential lock controls the differential lock to lock, such that the torque can be transmitted to the wheel that is not slipping, and the vehicle can get out of trouble.

At present, the transfer case and the differential lock are controlled by independent transfer case control units and differential lock control units, respectively, thereby not only increasing the number of control units and corresponding wiring harnesses, but also making communication between the control units more complicated.

Therefore, how to reduce the number of control units in a vehicle and simplify the communication between the control units is a technical problem that needs to be solved by those skilled in the art.

### SUMMARY

In view of this, embodiments of the present application provide a vehicle, aiming at controlling a transfer case and a differential through a control unit, further reducing the number of control units in the vehicle and simplifying communication between the control units.

In a first aspect, the present application provides a vehicle, including a transfer case, a differential lock, an engine controller, and a transmission drive controller; wherein
the engine controller is configured to acquire a request signal;
the engine controller is configured to send a control signal to the transmission drive controller according to the request signal, wherein when the request signal is a drive switch request signal, the control signal includes a motor rotation control signal and a motor drive current control signal; and when the request signal is a differential lock switch request signal, the control signal includes a differential lock control signal and a differential lock drive current control signal;
the transmission drive controller is configured to control a motor of the transfer case to rotate to a target position according to the motor rotation control signal and the motor drive current control signal when the received control signal includes the motor rotation control signal and the motor drive current control signal; and
the transmission drive controller is also configured to control the drive current in a coil of the differential lock according to the differential lock control signal and the differential lock drive current control signal when the received control signal includes the differential lock control signal and the differential lock drive current control signal.

Optionally, the motor rotation control signal includes a start rotation control signal and a stop rotation control signal;
the engine controller is configured to send the start rotation control signal to the transmission drive controller according to the drive switch request signal;
the transmission drive controller is configured to control the motor of the transfer case to start rotating according to the start rotation control signal and the motor drive current control signal, and feed a rotation position back to the engine controller;
the engine controller is configured to send a stop rotation control signal to the transmission drive controller when it is determined that the rotation position is a target position corresponding to a target drive mode according to the corresponding relationship between the position and the drive mode; and
the transmission drive controller is configured to control the motor of the transfer case to stop rotating according to the stop rotation control signal.

Optionally, the engine controller is further configured to acquire the driving speed of a vehicle; and
the engine controller is configured to send the start rotation control signal to the transmission drive controller after receiving the drive switch request signal and determining that the driving speed of the vehicle is less than a drive speed threshold.

Optionally, the vehicle differential lock is in an unlocked state, the differential lock control signal is a differential lock locking control signal, and the differential lock drive current control signal is a differential lock locking current control signal;
the engine controller is configured to send the differential lock locking control signal to the transmission drive controller according to the differential lock switch request signal; and
the transmission drive controller is configured to control the drive current in the coil of the differential lock to a current value corresponding to the differential lock locking current control signal according to the differential lock locking control signal.

Optionally, the vehicle differential lock is in a locked state, the differential lock control signal is a differential lock unlocking control signal, and the differential lock drive current control signal is a differential lock unlocking current control signal;
the engine controller is configured to send the differential lock unlocking control signal to the transmission drive controller according to the differential lock switch request signal; and
the transmission drive controller is configured to control the drive current in the coil of the differential lock to a current value corresponding to the differential lock unlocking current control signal according to the differential lock unlocking control signal.

Optionally, the engine controller is further configured to start timing after the vehicle differential lock is in a locked state and when it is determined that the driving speed of the vehicle is greater than a holding current speed threshold, and send a differential lock adjustment current control signal to the transmission drive controller after the timing duration reaches a preset duration; and
the transmission drive controller is configured to reduce the drive current in the coil of the differential lock according to the differential lock adjustment current control signal.

Optionally, the vehicle further includes an in-vehicle display apparatus; wherein
the transmission drive controller is further configured to send a feedback signal to the engine controller after the transfer case is switched to a target drive mode and/or the differential lock is switched to a target differential lock mode, wherein the drive mode includes any one of a two-wheel drive mode, a four-wheel drive mode and a low-speed four-wheel drive mode, and the target differential lock mode includes any one of front axle unlocking, front axle locking, rear axle unlocking and rear axle locking;
the engine controller is further configured to send a display signal of a target drive mode and/or a target differential lock mode to the in-vehicle display apparatus according to the feedback signal; and
the in-vehicle display apparatus is configured to display indication information of the target drive mode and/or the target differential lock mode according to the display signal of the target drive mode and/or the target differential lock mode.

Optionally, the vehicle further includes an in-vehicle display apparatus, wherein
the transmission drive controller is further configured to send a fault signal of the transfer case and/or the differential lock to the engine controller when it is determined that the transfer case and/or the differential lock is faulty;
the engine controller is further configured to send a display signal indicating that the transfer case is faulty and/or the differential lock is faulty to the in-vehicle display apparatus according to the fault signal of the transfer case and/or the differential lock; and
the in-vehicle display apparatus is configured to display indication information indicating that the transfer case is faulty and/or the differential lock is faulty according to the display signal indicating that the transfer case is faulty and/or the differential lock is faulty.

Optionally, the transmission drive controller and the engine controller are connected via a controller local area network.

In a second aspect, the present application provides a vehicle control method applied to a vehicle, wherein the vehicle includes a transfer case, a differential lock, an engine controller, and a transmission drive controller, and the method includes:

receiving, by the transmission drive controller, a control signal sent by the engine controller based on a request signal; wherein when the request signal is a drive switch request signal, the control signal includes a motor rotation control signal and a motor drive current control signal; and when the request signal is a differential lock switch request signal, the control signal includes a differential lock control signal and a differential lock drive current control signal;
controlling, by the transmission drive controller, a motor of the transfer case to rotate to a target position according to the motor rotation control signal and the motor drive current control signal when the transmission drive controller determines that the received control signal includes the motor rotation control signal and the motor drive current control signal; and
controlling, by the transmission drive controller, the drive current in a coil of the differential lock according to the differential lock control signal and the differential lock drive current control signal when the transmission drive controller determines that the received control signal includes the differential lock control signal and the differential lock drive current control signal.

Optionally, the motor rotation control signal includes a start rotation control signal and a stop rotation control signal;
the receiving, by the transmission drive controller, a control signal sent by the engine controller based on the request signal includes:
receiving, by the transmission drive controller, a start rotation control signal sent by the engine controller based on the drive switch request signal;
the controlling the motor of the transfer case to rotate to a target position according to the motor rotation control signal and the motor drive current control signal includes:
controlling the motor of the transfer case to start rotating according to the start rotation control signal and the motor drive current control signal, and feeding the rotation position back to the engine controller;
receiving a stop rotation control signal sent by the engine controller when the engine controller determines that the rotation position is the target position corresponding to the target drive mode according to the corresponding relationship between the position and the drive mode; and
controlling the motor of the transfer case to stop rotating according to the stop rotation control signal.

Optionally, the method further includes: acquiring, by the engine controller, the driving speed of the vehicle;
the receiving, by the transmission drive controller, the start rotation control signal sent by the engine controller based on the request signal includes:
receiving, by the transmission drive controller, the start rotation control signal sent by the engine controller after the engine controller receives a drive switch request signal and determines that the driving speed of the vehicle is less than a drive speed threshold.

Optionally, the differential lock is in an unlocked state, the differential lock control signal is a differential lock locking control signal, and the differential lock drive current control signal is a differential lock locking current control signal;
the receiving, by the transmission drive controller, a control signal sent by the engine controller based on the request signal includes:
receiving, by the transmission drive controller, a differential lock locking control signal sent by the engine controller based on the differential lock switch request signal;
the controlling the drive current in the coil of the differential lock according to the differential lock control signal and the differential lock drive current control signal includes:
controlling the drive current in the coil of the differential lock to a current value corresponding to the differential lock locking current control signal according to the differential lock locking control signal.

Optionally, the differential lock is in a locked state, the differential lock control signal is a differential lock unlocking control signal, and the differential lock drive current control signal is a differential lock unlocking current control signal;
the receiving, by the transmission drive controller, a control signal sent by the engine controller based on the request signal includes:
receiving, by the transmission drive controller, a differential lock unlocking control signal sent by the engine controller based on the differential lock switch request signal;
the controlling the drive current in the coil of the differential lock according to the differential lock control signal and the differential lock drive current control signal includes:
controlling the drive current in the coil of the differential lock to a current value corresponding to the differential lock unlocking current control signal according to the differential lock unlocking control signal.

Optionally, the method further includes: starting timing, by the engine controller, after the vehicle differential lock is in a locked state and when it is determined that the driving speed of the vehicle is greater than a holding current speed threshold, and sending a differential lock adjustment current control signal to the transmission drive controller after the timing duration reaches a preset duration; and
reducing, by the transmission drive controller, the drive current in the coil of the differential lock according to the differential lock adjustment current control signal.

Optionally, the vehicle further includes an in-vehicle display apparatus; the method further includes: sending, by the transmission drive controller, a feedback signal to the engine controller after the transfer case is switched to a target drive mode and/or the differential lock is switched to a target differential lock mode, wherein the drive mode includes any one of a two-wheel drive mode, a four-wheel drive mode and a low-speed four-wheel drive mode, and the target differential lock mode includes any one of front axle unlocking, front axle locking, rear axle unlocking and rear axle locking;
sending, by the engine controller, a display signal of a target drive mode and/or a target differential lock mode to an in-vehicle display apparatus according to the feedback signal; and
displaying, by the in-vehicle display apparatus, indication information of the target drive mode and/or the target differential lock mode according to the display signal of the target drive mode and/or the target differential lock mode.

Optionally, the method further includes: sending, by the transmission drive controller, a fault signal of the transfer case and/or the differential lock to the engine controller when it is determined that the transfer case and/or the differential lock is faulty;
sending, by the engine controller, a display signal indicating that the transfer case is faulty and/or the differential lock is faulty to the in-vehicle display apparatus according to the fault signal of the transfer case and/or the fault signal of the differential lock; and
displaying, by the in-vehicle display apparatus, indication information indicating that the transfer case is faulty and/or the differential lock is faulty according to the display signal indicating that the transfer case is faulty and/or the differential lock is faulty.

In a third aspect, the present application provides an electronic device, and the electronic device includes a memory and a processor, wherein the memory is configured to store signals or codes, and the processor is configured to execute the signals or codes, such that the device performs the method in any one of the above items of the second aspect.

In a fourth aspect, the present application provides a computer storage medium, wherein codes are stored in the computer storage medium, and when the codes are executed, the device executing the codes performs the method in any one of the above items of the second aspect.

It can be known from the above technical solution that the present application has the following beneficial effects:
the present application provides a vehicle, and the vehicle includes a transfer case, a differential lock, an engine controller, and a transmission drive controller. The transmission drive controller is a newly developed controller that integrates the software of the transfer case controller and the software of the differential lock controller, as well as a high-current drive circuit, thereby reducing the number of control chips, further reducing the wiring harnesses that need to be connected, and simplifying communication between control chips. The transfer case and the differential lock are controlled by the transmission drive controller, and the engine controller does not need to be modified. Since the engine controller is an integrated chip that cannot be easily modified, the modification cost can be reduced by using the transmission drive controller.

### BRIEF DESCRIPTION OF THE DRAWINGS

Fig. 1 is a schematic diagram of a component device of a vehicle provided in an embodiment of the present application;
Fig. 2 is a schematic diagram of another component device of a vehicle provided in an embodiment of the present application;

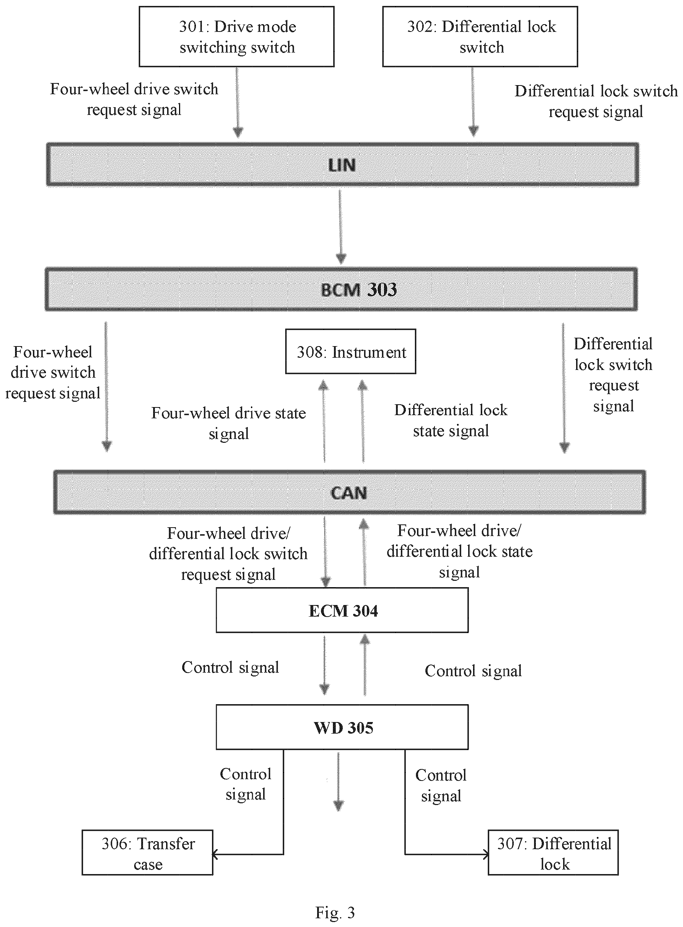

Fig. 3 is a schematic diagram of control logic provided in an embodiment of the present application;
Fig. 4 is a flow chart of a vehicle control method provided in an embodiment of the present application.

### DETAILED DESCRIPTION OF THE EMBODIMENTS

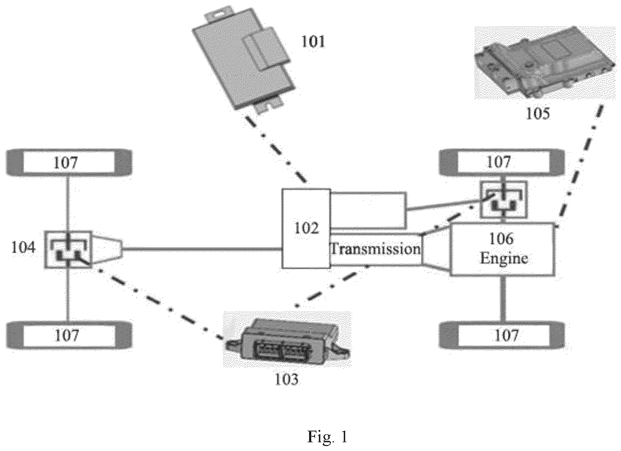

As shown in Fig. 1 which is a schematic diagram of a component device of a vehicle provided in an embodiment of the present application, the vehicle includes a transfer case controller 101, a transfer case 102, a differential lock controller 103, a differential lock 104, an engine controller 105, an engine 106, and wheels 107.

It should be noted that, in other embodiments, the vehicle may also include more or fewer components.

Wherein the engine controller 105 is configured to send a control signal to the transfer case controller 101 and/or the differential lock controller 103 after receiving the request signal. The transfer case controller 101 is configured to control the transfer case 102 based on the control signal after receiving the control signal. The differential lock controller 103 is configured to control the differential lock 104 based on the control signal after receiving the control signal.

In Fig. 1, the transfer case 102 and the differential lock 104 are controlled by independent transfer case controllers 101 and differential lock controllers 103, respectively, thereby not only increasing the number of control units (controllers) and corresponding wiring harnesses, but also making the communication between the control units more complicated. In addition, due to the impact of the current chip supply crisis, the more controllers there are, the more susceptible they are to the chip crisis, thereby resulting in a supply shortage of controllers.

Therefore, the present application provides a solution to integrate the transfer case controller and the differential lock controller into the engine controller. However, since both the transfer case and the differential lock require high-current drive during a driving process, the hardware of the current engine controller does not have the ability to drive high currents, that is, the drive circuit on the chip of the engine controller can only withstand a limited current. If the engine controller needs to drive, the chip of the engine controller will be newly modified. However, the chip of the engine controller is integrated, it is extremely inconvenient to modify each chip, and the modification cost is high.

Therefore, the present application designs a transmission drive controller, and the transmission drive controller integrates the software of the transfer case controller and the software of the differential lock controller and has a drive circuit capable of withstanding high currents (e.g., 50 A). By utilizing one control unit to control the transfer case and the differential, the number of control units in the vehicle is reduced, and further communication between the control units is simplified.

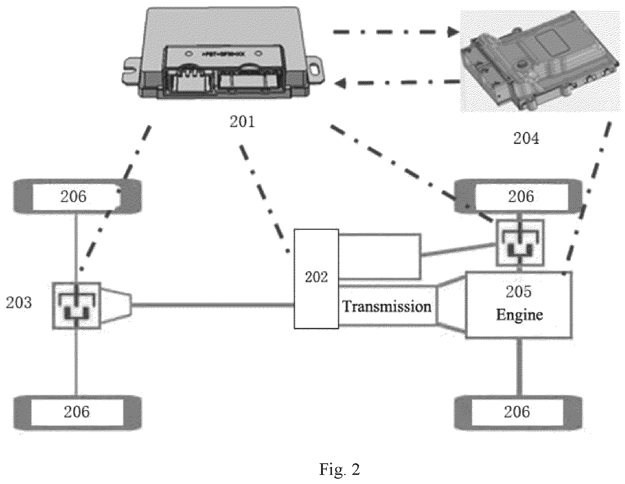

As shown in Fig. 2 which is a schematic diagram of another component device of a vehicle provided in an embodiment of the present application, the vehicle includes a transmission drive controller 201, a transfer case 202, a differential lock 203, an engine controller 204, an engine 205 and wheels 206. The transmission drive controller 201 and the engine controller 204 are connected via a controller local area network.

Compared with the vehicle component devices shown in Fig. 1, the vehicle component devices shown in Fig. 2 change the original control of the transfer case by the transfer case controller and the control of the differential lock by the differential lock controller to the control of the transfer case and the differential lock by the cooperation between the transmission drive controller and the engine controller. It can be seen that the number of controllers is reduced in the vehicle component devices shown in Fig. 2, that is, the number of chips is reduced, and further the corresponding wiring harnesses are reduced and the communication between controllers is simplified.

Specifically, the engine controller 204 is configured to receive a request signal. The request signal may be a request signal triggered by a user, or may be a request signal triggered by other electronic devices in the vehicle.

In some examples, the user can trigger the request signal by clicking a virtual button or a physical button inside the vehicle. The virtual button can be a button displayed on the in-vehicle display apparatus (such as a large screen of a vehicle infotainment system), and the physical button can be a button that actually exists in the vehicle, such as a button or a knob on a steering wheel.

In some other examples, other electronic devices in the vehicle trigger a request signal after detecting that relevant information (such as vehicle speed, altitude, elevation angle, etc.) satisfies preset conditions.

The request signal may include a drive switch request signal and a differential lock switch request signal. The drive switch request signal refers to a request signal for changing the vehicle drive mode, for example, for changing the vehicle drive mode to a two-wheel drive mode. The differential lock switch request signal refers to a request signal for changing the state of the differential lock of the vehicle, for example, for locking or unlocking the differential lock of the vehicle. As shown in Table 1, this table is a schematic table of request signals provided in an embodiment of the present application.

**Table 1:**

| Tx/Rx | Signals | Coding | Comments |
|---|---|---|---|
| Rx | DrvModSwtReq | 0x0:Mode 2WD | Driving Mode Switch Request |
| | | 0x1:Mode 4WD | |
| | | 0x2:Mode 4WD Low Range | |
| Rx | VehSpd | 0x0000-0x14D5: Valid values | Current Vehicle speed information |
| | | 0x14D6-0x1FFF:Reserved | |
| Rx | RearLckSwtReq | 0x0:No Request | Rear ELock Switch Request |
| | | 0x1:Request | |
| Rx | FrntLckSwtReq | 0x0:No Request | Front ELock Switch Request |
| | | 0x1:Request | |

In the table, "DrvModSwtReq" represents the drive switch request signal, and the values it carries can be "0x0:Mode 2WD" (indicating switching to a two-wheel drive mode), "0x1:Mode 4WD" (indicating switching to a four-wheel drive mode) and "0x2:Mode 4WD Low" (indicating switching to a low-speed four-wheel drive mode).

"VehSpd" represents a speed signal, and the value it carries may be the driving speed of the vehicle.

"RearLckSwtReq" and "FrntLckSwtReq" are both differential lock switch request signals, "RearLckSwtReq" is the rear axle differential lock locking request signal, and "FrntLckSwtReq" is the front axle differential lock locking request signal.

It should be noted that the above is merely an illustrative description of the request signal, and in other embodiments, the request signal may also be in other forms.

After acquiring the request signal, the engine controller 204 sends a control signal to the transmission drive controller 201 according to the request signal.

Wherein, the control signal corresponds to the request signal. For example, when the request signal is a drive switch request signal, the control signal includes a motor rotation control signal and a motor drive current control signal; and when the request signal is a differential lock switch request signal, the control signal includes a differential lock control signal and a differential lock drive current control signal.

Wherein, the motor rotation control signal refers to a signal that controls the motor to start and stop rotating, and the motor drive current control signal refers to a signal indicating the magnitude of the drive current provided to drive the motor; the differential lock control signal refers to a signal that controls the unlocking or locking of the differential lock, and the differential lock drive current control signal refers to a signal indicating the magnitude of the drive current provided to drive the differential lock.

When the control signal received by the transmission drive controller 201 includes a motor rotation control signal and a motor drive current control signal, the transmission drive controller 201 controls the motor of the transfer case 202 to rotate to a target position according to the motor rotation control signal and the motor drive current control signal.

When the control signal received by the transmission drive controller 201 is a differential lock control signal and a differential lock drive current control signal, the transmission drive controller 201 controls the drive current in the coil of the differential lock 203 according to the differential lock request signal and the differential lock drive current control signal.

For ease of understanding, the control logic of the technical solution provided in the embodiment of the present application is introduced below in conjunction with the accompanying drawings. The figure is a schematic diagram of the control logic provided in the embodiment of the present application.

The user triggers a drive switch request signal through the drive mode switching switch 301 in the vehicle, and the drive switch request signal is transmitted to the vehicle body control module BCM 303 through a LIN bus. The BCM 303 transmits the drive switch request signal to the engine controller ECM 304 through a CAN bus. Based on the received drive switch request signal, the ECM 304 sends a motor rotation control signal and a motor drive current control signal to the transmission drive controller WD 305, such that the transmission drive controller WD 305 controls the transfer case 306 based on the motor rotation control signal and the motor drive current control signal.

Then, the WD 305 may send a feedback signal to the ECM 304, such as a feedback signal indicating that the transfer case is switched to a target drive mode. After receiving the feedback signal, the ECM 304 sends a display signal to the in-vehicle display apparatus (instrument 308) based on the feedback signal, such as a display signal that displays the target drive mode. The instrument displays the indication information of the target drive mode based on the display signal of the target drive mode. The indication information is configured to indicate the current mode, such as the four-wheel drive mode. The indication information may be provided by an indicator lamp or a marker.

The user can also trigger the differential lock switch request signal through the differential lock switch 302 in the vehicle, and the differential lock switch request signal is transmitted to the BCM 303 through the LIN bus. The BCM 303 transmits the differential lock switch request signal to the ECM 304 through the CAN bus, and the ECM 304 sends a differential lock control signal and a differential lock drive current control signal to the WD 305 based on the received differential lock switch request signal, such that the WD 305 controls the differential lock 307 based on the differential lock control signal and the differential lock drive current control signal.

Then, the WD 305 may send a feedback signal to the ECM 304, such as a feedback signal indicating locking of the differential lock or a feedback signal indicating unlocking of the differential lock. After receiving the feedback signal, the ECM 304 sends a display signal to the instrument 308 based on the feedback signal, such as a display signal indicating locking of the differential lock, and the instrument displays the indication information indicating locking of the differential lock based on the display signal indicating locking of the differential lock.

The transmission drive controller in this embodiment replaces the original transfer case controller and differential lock controller. The engine controller sends a control signal to the transmission drive controller, and the transmission drive controller controls the transfer case and the differential lock based on the control signal, thereby simplifying a plurality of control units and satisfying the needs of high-current drive. In this solution, the already integrated engine controller does not need to be modified. Therefore, the number of control units can be reduced at a lower cost, the corresponding wiring harnesses are reduced, and the communication between control units is simplified.

The following respectively describes processes in which the transmission drive controller controls the transfer case and the transmission drive controller controls the differential lock in two cases.

### Case 1: the transmission drive controller controls the transfer case.

It is understandable that a vehicle has a plurality of drive modes, for example, the drive modes can be divided into three types: a two-wheel drive mode, a four-wheel drive mode, and a low-speed four-wheel drive mode, wherein the low-speed four-wheel drive mode indicates that the transmission input torque is amplified by K times and then distributed to the front and rear wheels of a vehicle, and K is greater than 1.

In some embodiments, the motor rotation control signal includes a start rotation control signal and a stop rotation control signal, wherein the start rotation control signal is a signal for controlling the motor of the transfer case to start rotating, and the stop rotation control signal is a signal for controlling the motor of the transfer case to stop rotating.

The engine controller can send a start rotation control signal to the transmission drive controller according to the drive switch request signal. The transmission drive controller controls the motor of the transfer case to start rotating according to the start rotation control signal and the motor drive current control signal, and feeds the rotation position back to the engine controller; and when the engine controller determines that the rotation position is the target position corresponding to the target drive mode according to the corresponding relationship between the position and the drive mode, the engine controller sends a stop rotation control signal to the transmission drive controller.

The transmission drive controller controls the motor of the transfer case to stop rotating according to the stop rotation control signal, and then controls the motor of the transfer case to rotate to the target position. The engine controller can store the corresponding relationship between the position and the drive mode in advance, for example, position 1 corresponds to drive mode 1, and position 2 corresponds to drive mode 2. After the transmission drive controller feeds back the rotation position of the motor, whether the rotation position is the target position corresponding to the target drive mode can be determined. If so, a stop rotation control signal is sent to the transmission drive controller. The target drive mode is the drive mode that the user wants to switch to (the drive mode carried in the drive switch request signal). For example, if the user wants to switch to the four-wheel drive mode, the target drive mode is the four-wheel drive mode.

It should be noted that the corresponding relationship between the position and the drive mode is preset, for example, a certain position of the motor is set to 0°, and one full rotation of the motor is set to 360°, and each rotation of 120° is a drive mode, for example, the 0° position corresponds to the two-wheel drive mode, the 120° position corresponds to the four-wheel drive mode, and the 240° position corresponds to the low-speed four-wheel drive mode. When the motor rotates to 120°, the engine controller receives feedback from the transmission drive controller that the rotation position of the motor is 120°, then determines that the motor has reached the target position corresponding to the four-wheel drive mode at this time, and sends a stop rotation control signal to the transmission drive controller to control the motor to stop rotating.

In some embodiments, after receiving the drive switch request signal, the engine controller can also acquire the driving speed of the vehicle, and when it is determined that the driving speed of the vehicle is less than a driving speed threshold (a preset value), the engine controller sends a start rotation control signal to the transmission drive controller.

Introduction is given below in conjunction with examples.

### 1.1. Switch from the two-wheel drive mode to the four-wheel drive mode.

The drive mode of the vehicle is the two-wheel drive mode. As mentioned above, when the user or the vehicle itself needs to switch the drive mode, the vehicle itself can also trigger a drive switch request signal, and the user can also trigger the drive switch request signal through a virtual button or a physical button. The drive switch request signal can be a request signal for switching to the four-wheel drive mode.

In some examples, the user may trigger a request signal for switching to the four-wheel drive mode (e.g., DrvModSwtReq=0x1: Mode 4WD).

After the engine controller receives the request signal for switching to the four-wheel drive mode, the engine controller determines whether the driving speed of the vehicle is less than a first speed threshold, and the first speed threshold can be 80 km/h or other values. If the driving speed of the vehicle is less than the first speed threshold, a start rotation control signal (e.g., ShiftMotorCmd=0x1: Motor DriveToRight) and a motor drive current control signal (e.g., MotorDutyCycle=100%) are sent to the transmission drive controller via the CAN bus, wherein "ShiftMotorCmd=0x1: Motor DriveToRight" represents starting to rotate to the right, and "MotorDutyCycle=100%" represents that the ratio of the drive current is 100%.

After receiving the start rotation control signal and the motor drive current control signal, the transmission drive controller drives the motor to rotate to the right with the current value indicated by the motor drive current control signal, detects the rotation position of the motor, and feeds the rotation position back to the engine controller through the CAN bus (e.g., the rotation position can be position 1, position 2, position 3 or position 4, wherein MotorEncoder1State represents position 1, MotorEncoder2State represents position 2, MotorEncoder3State represents position 3, and MotorEncoder4State represents position 4, and positions 1 to position 4 are obtained by dividing the circumference equally, and different positions correspond to different drive modes).

After receiving the rotation position fed back from the transmission drive controller, the engine controller determines whether the position after rotation is the target position corresponding to the four-wheel drive mode. If so, the engine controller sends a stop rotation control signal (e.g., ShiftMotorCmd=0x0:Motor Off) and a motor drive current control signal (e.g., MotorDutyCycle=0) to the transmission drive controller, wherein "ShiftMotorCmd=0x0:Motor Off" represents stopping rotation, and "MotorDutyCycle=0" represents that the current value of the drive current is 0.

After receiving "ShiftMotorCmd=0x0: Motor Off" and "MotorDutyCycle=0", the transmission drive controller controls the motor of the transfer case to stop rotating.

Furthermore, the engine controller may also send a four-wheel drive mode display signal (e.g., SystemOperMod=0x1:Mode 4WD) to the in-vehicle display apparatus, and the in-vehicle display apparatus displays the four-wheel drive mode indication information based on "SystemOperMod=0x1:Mode 4WD", such as lighting up a four-wheel drive mode icon.

It should be noted that, in the above examples, only switching from a two-wheel drive mode to a four-wheel drive mode for turning right is taken as an example for introduction. In the embodiment of the present application, when the start rotation control signal is ShiftMotorCmd=0x1: Motor DriveToRight, the switching order of the drive mode is two-wheel drive mode, four-wheel drive mode, and low-speed four-wheel drive mode. When the start rotation control signal is ShiftMotorCmd=0x1: Motor DriveToLeft, the switching order of the drive mode is low-speed four-wheel drive mode, four-wheel drive mode, and two-wheel drive mode. Those skilled in the art can set the rotation direction of the motor based on the implementation needs.

### 1.2. Switch from the four-wheel drive mode to the two-wheel drive mode.

The drive mode of the vehicle is a four-wheel drive mode, and the user can trigger the drive switch request signal through a virtual button or a physical button. The drive switch request signal can be a request signal for switching to the two-wheel drive mode (e.g., DrvModSwtReq=0x0:Mode2WD).

In some examples, the user may trigger a request signal for switching to the two-wheel drive mode.

After the engine controller receives the request signal for switching to the two-wheel drive mode, the engine controller sends a start rotation control signal (e.g., ShiftMotorCmd=0x2: Motor DriveToLeft) and a motor drive current control signal (e.g., MotorDutyCycle=100%) to the transmission drive controller through the CAN bus, wherein "ShiftMotorCmd=0x2: Motor DriveToLeft" represents that the motor starts to rotate to the left, and "MotorDutyCycle=100%" represents that the ratio of the drive current is 100%.

After receiving the start rotation control signal and the motor drive current control signal, the transmission drive controller drives the motor to rotate to the left with the current value indicated by the motor drive current control signal, detects the rotation position of the motor, and feeds the rotation position back to the engine controller through the CAN bus.

After receiving the rotation position fed back from the transmission drive controller, the engine controller determines whether the position is the target position corresponding to the two-wheel drive mode. If so, the engine controller sends a stop rotation control signal (e.g., ShiftMotorCmd=0x0:Motor Off) and a motor drive current control signal (e.g., MotorDutyCycle=0) to the transmission drive controller, wherein "ShiftMotorCmd=0x0:Motor Off" represents stopping rotation, and "MotorDutyCycle=0" represents that the current value of the drive current is 0.

After receiving "ShiftMotorCmd=0x0: Motor Off" and "MotorDutyCycle=0", the transmission drive controller controls the motor of the transfer case to stop rotating.

Furthermore, the engine controller may also send a two-wheel drive mode display signal (e.g., SystemOperMod=0x1:Mode 2WD) to the in-vehicle display apparatus, and the in-vehicle display apparatus displays the two-wheel drive mode indication information based on "SystemOperMod=0x1:Mode 2WD", such as lighting up a two-wheel drive mode icon.

### 1.3. Switch from the two-wheel drive mode or the four-wheel drive mode to the low-speed four-wheel drive mode.

The drive mode of the vehicle is a two-wheel drive mode or a four-wheel drive mode, and the user can trigger a drive switch request signal through a virtual button or a physical button. The drive switch request signal can be a request signal for switching to the low-speed four-wheel drive mode.

In some examples, the user may trigger a request signal for switching to the low-speed four-wheel drive mode (e.g., DrvModSwtReq=0x2: Mode 4WD Low Range).

After receiving the request signal for switching to the low-speed four-wheel drive mode, the engine controller determines whether the driving speed of the vehicle is less than a second speed threshold, and the second speed threshold can be 3 km/h or other values, such as 5 km/h. If the driving speed of the vehicle is less than the second speed threshold, a start rotation control signal (e.g., ShiftMotorCmd=0x1: Motor DriveToRight) and a motor drive current control signal (e.g., MotorDutyCycle=100%) are sent to the transmission drive controller via the CAN bus, wherein "ShiftMotorCmd=0x1: Motor DriveToRight" represents starting to rotate to the right, and "MotorDutyCycle=100%" represents that the ratio of the drive current is 100%.

After receiving the start rotation control signal and the motor drive current control signal, the transmission drive controller drives the motor to rotate to the right with the current value indicated by the motor drive current control signal, detects the rotation position of the motor, and feeds the rotation position back to the engine controller through the CAN bus.

After receiving the rotation position fed back from the transmission drive controller, the engine controller determines whether the position is the target position corresponding to the low-speed four-wheel drive mode. If so, a stop rotation control signal (e.g., ShiftMotorCmd=0x0:Motor Off) and a motor drive current control signal (e.g., MotorDutyCycle=0) are sent to the transmission drive controller, wherein "ShiftMotorCmd=0x0:Motor Off" represents stopping rotation, and "MotorDutyCycle=0" represents that the current value of the drive current is 0.

After receiving "ShiftMotorCmd = 0x0:Motor Off" and "MotorDutyCycle = 0", the transmission drive controller controls the motor of the transfer case to stop rotating.

Furthermore, the engine controller can also send a display signal of the low-speed four-wheel drive mode (e.g., SystemOperMod=0x2:Mode 4WD Low Range) to the in-vehicle display apparatus, and the in-vehicle display apparatus displays indication information of the low-speed four-wheel drive mode based on "SystemOperMod=0x2:Mode4WD Low Range", such as lighting up a low-speed four-wheel drive mode icon.

### 1.4. Switch from the low-speed four-wheel drive mode to the two-wheel drive mode or the four-wheel drive mode.

The drive mode of the vehicle is the low-speed four-wheel drive mode, and the user can trigger a drive switch request signal through a virtual button or a physical button. The drive switch request signal can be a request signal for switching to the four-wheel drive mode.

It should be noted that, for ease of understanding, switching to the four-wheel drive mode is taken as an example for introduction in 1.4. To switch to the two-wheel drive mode, the motor of the transfer case is just controlled to rotate to the position corresponding to the two-wheel drive mode.

In some examples, the user may trigger a request signal for switching to the four-wheel drive mode (e.g., DrvModSwtReq=0x1: Mode 4WD).

After receiving the request signal for switching to the four-wheel drive mode, the engine controller determines whether the driving speed of the vehicle is less than a third speed threshold, and the third speed threshold can be 3/h or other values, such as 5. If the driving speed of the vehicle is less than the third speed threshold, a start rotation control signal (e.g., ShiftMotorCmd=0x1: Motor DriveToLeft) and a motor drive current control signal (e.g., MotorDutyCycle=100%) are sent to the transmission drive controller via the CAN bus, wherein "ShiftMotorCmd=0x1: Motor DriveToLeft" represents starting to rotate to the left, and "MotorDutyCycle=100%" represents that the ratio of the drive current is 100%. The third speed threshold may be the same as the second speed threshold in 1.3.

After receiving the start rotation control signal and the motor drive current control signal, the transmission drive controller drives the motor to rotate to the left with the current value indicated by the motor drive current control signal, detects the rotation position of the motor, and feeds the rotation position back to the engine controller through the CAN bus.

After receiving the rotation position fed back from the transmission drive controller, the engine controller determines whether the position is the target position corresponding to the four-wheel drive mode. If so, a stop rotation control signal (e.g., ShiftMotorCmd=0x0:Motor Off) and a motor drive current control signal (e.g., MotorDutyCycle=0) are sent to the transmission drive controller, wherein "ShiftMotorCmd=0x0:Motor Off" represents stopping rotation, and "MotorDutyCycle=0" represents that the current value of the drive current is 0.

After receiving "ShiftMotorCmd=0x0: Motor Off" and "MotorDutyCycle=0", the transmission drive controller controls the motor of the transfer case to stop rotating.

Furthermore, the engine controller may also send a four-wheel drive mode display signal (e.g., SystemOperMod=0x1:Mode 4WD) to the in-vehicle display apparatus, and the in-vehicle display apparatus displays the four-wheel drive mode indication information based on "SystemOperMod=0x1:Mode 4WD", such as lighting up a four-wheel drive mode icon.

### Case 2: The transmission drive controller controls the differential lock.

The differential lock of a vehicle generally includes a front axle differential lock and a rear axle differential lock. It can be understood that the differential lock is a locking mechanism mounted on the differential and configured to improve the ability of the vehicle to pass through poor roads. When one of the drive axles of the vehicle is idling, the differential can be quickly locked, the two drive axles are rigidly connected, and most or even all of the torque is transmitted to the drive axle that is not slipping, thereby making full use of an adhesive force of the nonslipping drive axle to generate a sufficient tractive force, and enabling the vehicle to continue to drive. Simply speaking, the differential lock can connect the left and right drive wheels together to prevent one wheel from not turning when the other wheel slips, such that the vehicle can pass through poor roads smoothly.

In some embodiments, the differential lock is in an unlocked state, the differential lock control signal is a differential lock locking control signal, and the differential lock drive current control signal is a differential lock locking current control signal. The differential lock locking control signal refers to a signal for controlling locking of the differential lock, and the differential lock locking current control signal refers to a signal that controls the current supplied when the differential is locked, for example, the current is 7 A.

The engine controller sends a differential lock locking control signal to the transmission drive controller according to the differential lock switch request signal. The transmission drive controller controls the drive current in the coil of the differential lock to the current value corresponding to the differential lock locking current control circuit according to the differential lock locking control signal.

In some embodiments, after the vehicle is in a locked state, the engine controller may also start timing when it is determined that the driving speed of the vehicle is greater than the holding current speed threshold, and send a differential lock adjustment current control signal to the transmission drive controller when the timing duration reaches a preset duration. The transmission drive controller reduces the drive current in the coil of the differential lock (for example, from 7 A to 4 A) according to the differential lock adjustment current control signal, thereby further reducing the duration of the high current and reducing power consumption.

In some other embodiments, the differential lock is in a locked state, the differential lock control signal is a differential lock unlocking control signal, and the differential lock drive current control signal is a differential lock unlocking current control signal. The differential lock unlocking control signal refers to a signal for controlling the unlocking of the differential lock, and the differential lock unlocking current control signal refers to a signal for controlling the current provided when the differential lock is unlocked, for example, the current is 0 A.

The engine controller sends a differential lock unlocking control signal to the transmission drive controller according to the differential lock switch request signal. The transmission drive controller controls the drive current in the coil of the differential lock to the current value corresponding to the differential lock unlocking current control signal according to the differential lock unlocking control signal.

For ease of understanding, the control logic of the front axle differential lock and the rear axle differential lock are introduced below respectively. The control logic of the rear axle differential lock is introduced below first.

### 2.1. The rear axle differential lock switches from an unlocked state to a locked state.

The rear axle differential lock of the vehicle is in an unlocked state, and the user or the vehicle itself needs to switch the state of the differential lock. The user can trigger the differential lock switch request signal through a virtual button or a physical button, and the vehicle itself can also trigger the differential lock switch request signal. The differential lock switch request signal can be a differential lock locking request signal.

In some examples, the user may trigger a differential lock locking request signal (e.g., RearLckSwtReq=0x1:Request).

After receiving the differential lock locking request signal, the engine controller determines whether the driving speed of the vehicle is less than a fourth speed threshold, and the fourth speed threshold can be 5 km/h or other values. If the driving speed of the vehicle is less than the fourth speed threshold, a differential lock locking control signal (e.g., RearLckReq=0x1: Lock Req) and a differential lock locking current control signal (e.g., RearlckCurtLvelReq=0x0: Start up current (7 A)) are sent to the transmission drive controller via the CAN bus.

After receiving the differential lock locking control signal and the differential lock locking current control signal, the transmission drive controller energizes the coil of the rear axle differential lock, as mentioned above, the transmission drive controller controls the drive current in the coil of the rear axle differential lock to 7 A to lock the rear axle differential lock, and sends a feedback signal indicating locking of the rear axle differential lock (e.g., RearLckSts=0x1:Locked) and a feedback signal of the drive current (e.g., RearlckActCurtLvel=0x0: Start up current(7A)) to the engine controller.

The engine controller sends a rear axle locking display signal to the instrument based on the above feedback signal indicating locking of the differential lock and the feedback signal of the drive current. The instrument displays the indication information indicating rear axle locking based on the display signal of rear axle locking, such as lighting up a rear axle locking icon.

In some embodiments, the engine controller may start timing when it is determined that the rear axle differential lock is locked (RearLckActSts=0X1:lock) and the driving speed of the vehicle is greater than a holding current speed threshold (e.g., 5 km/h or other values), and send a differential lock adjustment current control signal (RearlckCurtLvelReq=0X1:holding current(4A)) to the transmission drive controller after the timing duration reaches a preset duration (the preset duration may be, for example, 5 seconds or other values). The transmission drive controller reduces the drive current in the coil of the rear axle differential lock according to the differential lock adjustment current control signal, for example, the transmission drive controller reduces the drive current in the coil of the rear axle differential lock from 7 A to a holding lock current of 4 A, and sends a feedback signal for holding a low current to the engine controller (RearlckActCurtLvel=0X1:holding current(4A)).

Wherein during a timing process of the engine controller, if the driving speed of the vehicle is lower than the above holding current speed threshold and the wheel speed difference between the two wheels of the rear shaft is greater than the first preset rotational speed (e.g., 36 rpm or other values), timing will restart.

It should be noted that the above holding lock current of 4 A is only an exemplary description, and those skilled in the art can design a specific value of the holding lock current based on actual needs.

### 2.2. The rear axle differential lock switches from a locked state to an unlocked state.

The rear axle differential lock of the vehicle is in a locked state, and the user or the vehicle itself needs to switch the state of the differential lock. The user can trigger the differential lock switch request signal through a virtual button or a physical button, and the vehicle itself can also trigger the differential lock switch request signal. The differential lock switch request signal can be a differential lock unlocking request signal.

In some examples, the user may trigger a rear axle differential lock unlocking request signal, or the vehicle itself may detect that the driving speed of the vehicle is greater than a fifth speed threshold (e.g., 38 km/h or other values), so as to trigger a rear axle differential lock unlocking request signal.

After receiving the rear axle differential lock unlocking request signal, the engine controller sends a rear axle differential lock unlocking control signal (e.g., RearLckReq=0x0:Unlock Req) to the transmission drive controller via the CAN bus. The transmission drive controller de-energizes the coil in the rear axle differential lock according to the rear axle differential lock unlocking control signal, i.e., the transmission drive controller controls the drive current of the coil in the rear axle differential lock to 0 A, and then sends a feedback signal indicating unlocking of the rear axle differential lock to the engine controller (e.g., RearLckActSts=0x0:Unlock).

After receiving the feedback signal indicating unlocking of the rear axle differential lock, the engine controller sends a display signal indicating unlocking of the rear axle differential lock (e.g., RearLckSts=0x0:UnLocked) to the instrument, and the instrument displays the indication information indicating unlocking of the rear axle differential lock, for example, the indicator lamp indicating unlocking of the rear axle differential lock may be lighted up, or the indicator lamp indicating locking of the rear axle differential lock may be turned off.

In some embodiments, the engine controller can also acquire the driving speed of the vehicle when the rear axle differential lock of the vehicle is in a locked state. If the driving speed of the vehicle is in a first preset speed interval (e.g., 28 km/h to 38 km/h, or other speed intervals), a display signal indicating excessive speed (e.g., RearLckSts=0x2: Over-Speed Warning) is sent to the in-vehicle display apparatus. Based on the display signal indicating excessive speed, the instrument displays an indication information of excessive speed to prompt the user that the vehicle speed is too high.

In some embodiments, the engine controller may also refuse to lock the differential lock. Specifically, when the rear axle differential lock of the vehicle is in an unlocked state, if the driving speed of the vehicle is greater than a sixth speed threshold (e.g., 5 km/h or other values) or the wheel speed difference between the two wheels of the rear shaft is greater than a second preset rotational speed (e.g., 50 rpm, or other values). At this time, even if the rear axle differential lock locking request signal is triggered, the engine controller will not send a rear axle differential lock locking control signal to the transmission drive controller. In addition, the engine controller sends a non-lockable display signal to the instrument (e.g., RearLckSts=0x3: Lock Request Deny), and then the instrument displays a non-lockable indication information based on the non-lockable display signal to prompt the user that the differential cannot be locked at present.

The control logic of the front axle differential lock is introduced below.

### 3.1. The front axle differential lock switches from an unlocked state to a locked state.

The front axle differential lock of the vehicle is in an unlocked state, and the user can trigger the differential lock switch request signal through a virtual button or a physical button. The differential lock switch request signal can be a differential lock locking request signal.

In some examples, the rear axle differential lock of the vehicle is in a locked state, and the drive mode of the vehicle is a low-speed four-wheel drive module, and the user can trigger a differential lock locking request signal (e.g., FrntLckSwtReq=0x1:Request).

After receiving the differential lock locking request signal, the engine controller determines whether the driving speed of the vehicle is less than the seventh speed threshold, and the seventh speed threshold can be 5 km/h or other values. If the driving speed of the vehicle is less than the seventh speed threshold, a differential lock locking control signal (e.g., FrntLckReq=0x1: Lock Req) and a differential lock locking current control signal (e.g., FrntlckCurtLvelReq=0x0: Start up current (7A)) are sent to the transmission drive controller via the CAN bus. The seventh speed threshold may be the same as the fourth speed threshold.

After receiving the differential lock locking control signal and the differential lock locking current control signal, the transmission drive controller energizes the coil of the front axle differential lock, as mentioned above, the transmission drive controller controls the drive current in the coil of the front axle differential lock to 7 A to lock the front axle differential lock, and sends a feedback signal indicating locking of the front axle differential lock (e.g., FrntLckSts=0x1:Locked) and a feedback signal of the drive current (e.g., FrntlckActCurtLvel=0x0: Start up current(7 A)) to the engine controller.

The engine controller sends a front axle locking display signal (e.g., FrntLckSts=0x1: Locked) to the instrument based on the feedback signal indicating locking of the differential lock and the feedback signal of the drive current. The instrument displays the indication information of front axle locking based on the display signal of front axle locking, such as lighting up a front axle locking icon.

It should be noted that the control logic of the drive current in the coil of the front axle differential lock is similar to the control logic of the drive current in the coil of the rear axle differential lock, which can be seen in 2.1 above and will not be repeated redundantly herein.

### 3.2 The front axle differential lock switches from a locked state to an unlocked state.

When the front axle differential lock of the vehicle is in a locked state, the differential lock switch request signal can be triggered in a variety of ways. The differential lock switch request signal can be a differential lock unlocking request signal.

**In** some examples, the user can trigger a front axle differential lock unlocking request signal (e.g., pressing the front axle differential lock switch button or the rear axle differential lock switch button), and the engine controller receives the front axle differential lock unlocking request signal, and then sends a front axle differential lock unlocking control signal (e.g., FrntLckReq=0x0:Unlock Req) to the transmission drive controller.

**In** some other examples, after the engine controller determines that the drive mode of the vehicle has exited the low-speed four-wheel drive mode, the engine controller sends a front axle differential lock unlocking control signal to the transmission drive controller; or when the engine controller determines that the driving speed of the vehicle is greater than an eighth speed threshold (e.g., 38 km/h or other values), the engine controller sends a front axle differential lock unlocking control signal to the transmission drive controller. The eighth speed threshold may be the same as the above fifth speed threshold.

After receiving the front axle differential lock unlocking control signal, the transmission drive controller de-energizes the coil in the front axle differential lock according to the front axle differential lock unlocking control signal, that is, the transmission drive controller controls the drive current of the coil in the front axle differential lock to 0 A, and then sends a feedback signal indicating unlocking of the front axle differential lock (e.g., FrntLckActSts=0x0:Unlock) to the engine controller.

After receiving the feedback signal indicating unlocking of the front axle differential lock, the engine controller sends a display signal indicting unlocking of the front axle differential lock (e.g., FrntLckSts=0x1:Locked) to the instrument, and the instrument displays the indication information indicating unlocking of the front axle differential lock, for example, the indicator lamp indicating unlocking of the front axle differential lock may be lighted up, and of course, the indicator lamp indicating locking of the front axle differential lock may also be turned off.

In some embodiments, the engine controller can also acquire the driving speed of the vehicle when the front axle differential lock of the vehicle is in a locked state. If the driving speed of the vehicle is in a second preset speed interval (for example, 28 km/h to 38km/h, or other speed intervals), a display signal indicating excessive vehicle speed (e.g., FrntLckSts=0x2: Over-Speed Warning) is sent to the in-vehicle display apparatus. Based on the display signal indicating excessive speed, the instrument displays an indication information indicating excessive speed to prompt the user that the vehicle speed is too high. The second preset speed interval and the first preset speed interval can be the same.

In some embodiments, the engine controller may also refuse to lock the differential lock. Specifically, when the front axle differential lock of the vehicle is in an unlocked state, if the driving speed of the vehicle is greater than a ninth speed threshold (e.g., 5 km/h or other values), or the wheel speed difference between the two wheels of the front shaft is greater than the third preset rotational speed (e.g., 50 rpm, or other values), or the rear axle differential lock of the vehicle is in an unlocked state, or the drive mode of the vehicle is not a low-speed four-wheel drive mode (e.g., the drive mode is a two-wheel drive mode or a four-wheel drive mode). At this time, even if the front axle differential lock locking request signal is triggered, the engine controller will not send the front axle differential lock locking control signal to the transmission drive controller. In addition, the engine controller sends a non-lockable display signal to the instrument (e.g., FrntLckSts=0x3: Lock Request Deny), and then the instrument displays a non-lockable indication information based on the non-lockable display signal to prompt the user that the differential cannot be locked at present. The ninth speed threshold may be the same as the sixth speed threshold, and the third preset rotational speed may be the same as the second preset rotational speed.

In some embodiments, the transmission drive controller can also detect whether the transfer case is faulty. When it is determined that the transfer case is faulty, a fault signal (MotorFaultState) of the transfer case can be sent to the engine controller. The fault of the transfer case can be open circuit or short circuit of a coil, etc. Then the engine controller sends a display signal indicating that the transfer case is faulty to the in-vehicle display apparatus according to the fault signal of the transfer case. The in-vehicle display apparatus displays the indication information indicating that the transfer case is faulty according to the display signal indicating that the transfer case is faulty (e.g., DiagLmpReq=0x1: Lamp is being requested), for example, the instrument lights up a fault lamp of the transfer case.

In some other embodiments, the transmission drive controller can also detect whether the differential is faulty. When it is determined that the differential is faulty, the transmission drive controller can send a fault signal (ELockFaultState) of the differential to the engine controller. The fault of the differential can be open circuit or short circuit of the coil of the differential, etc. Then, the engine controller sends a display signal indicating that the differential is faulty to the in-vehicle display apparatus according to the fault signal of the differential. The in-vehicle display apparatus displays the indication information indicating that the differential is faulty according to the display signal indicating that the differential is faulty (e.g., FrntLckSts=0x4:Fault), for example, the instrument lights up a differential fault lamp.

It should be noted that when the transfer case and the differential lock are faulty at the same time, the transmission drive controller can simultaneously feed the above fault signals such as "MotorFaultState" and "ELockFaultState" back to the engine controller.

Based on the above description, the embodiment of the present application provides a vehicle, and the vehicle includes a transfer case, a differential lock, an engine controller, and a transmission drive controller. The transmission drive controller is a newly developed controller that integrates the software of the transfer case controller and the software of the differential lock controller, as well as a high-current drive circuit, thereby reducing the number of control chips, further reducing the wiring harnesses that need to be connected, and simplifying communication between control chips. Specifically, the engine controller is configured to acquire a request signal, and send a control signal to the transmission drive controller according to the request signal. When the request signal is a drive switch request signal, the control signal includes a motor rotation control signal and a motor drive current control signal; when the request signal is a differential lock switch request signal, the control signal includes a differential lock control signal and a differential lock drive current control signal; the transmission drive controller is configured to control the motor of the transfer case to rotate to a target position according to the motor rotation control signal and the motor drive current control signal when the received control signal includes a motor rotation control signal and a motor drive current control signal; and the transmission drive controller is further configured to control the drive current in the coil of the differential lock according to the differential lock control signal and the differential lock drive current control signal when the received control signal includes a differential lock control signal and a differential lock drive current control signal. The transfer case and the differential lock are controlled by the transmission drive controller, and the engine controller does not need to be modified. Since the engine controller is an integrated chip that cannot be easily modified, the modification cost can be reduced by using the transmission drive controller.

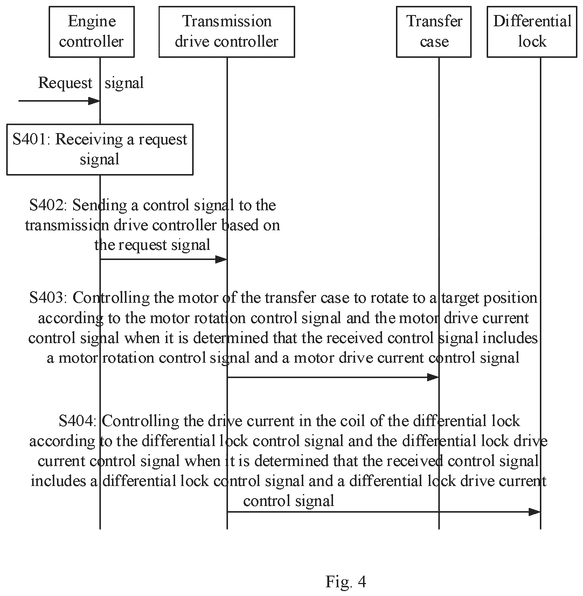

The embodiment of the present application also provides a vehicle control method, and the method can be applied to the vehicle in the above embodiment. As shown in Fig. 4 which is a flow chart of a vehicle control method provided in the embodiment of the present application, the method includes:
S401, receiving, by the engine controller, a request signal;
S402: sending, by the engine controller, a control signal to the transmission drive controller based on the request signal.

Wherein the transmission drive controller receives a control signal sent by the engine controller based on a request signal; when the request signal is a drive switch request signal, the control signal includes a motor rotation control signal and a motor drive current control signal; and when the request signal is a differential lock switch request signal, the control signal includes a differential lock control signal and a differential lock drive current control signal.

S403: controlling, by the transmission drive controller, the motor of the transfer case to rotate to a target position according to the motor rotation control signal and the motor drive current control signal when the transmission drive controller determines that the received control signal includes a motor rotation control signal and a motor drive current control signal.

S404: controlling, by the transmission drive controller, the drive current in the coil of the differential lock according to the differential lock control signal and the differential lock drive current control signal when the transmission drive controller determines that the received control signal includes a differential lock control signal and a differential lock drive current control signal.

Optionally, the motor rotation control signal includes a start rotation control signal and a stop rotation control signal;
the receiving, by the transmission drive controller, a control signal sent by the engine controller based on the request signal includes:
receiving, by the transmission drive controller, the start rotation control signal sent by the engine controller based on the drive switch request signal;
the controlling the motor of the transfer case to rotate to a target position according to the motor rotation control signal and the motor drive current control signal includes:
controlling the motor of the transfer case to start rotating according to the start rotation control signal and the motor drive current control signal, and feeding the rotation position back to the engine controller;
receiving a stop rotation control signal sent by the engine controller when the engine controller determines that the rotation position is a target position corresponding to the target drive mode according to the corresponding relationship between the position and the drive mode; and
controlling the motor of the transfer case to stop rotating according to the stop rotation control signal.

Optionally, the method further includes: acquiring, by the engine controller, the driving speed of the vehicle;
the receiving, by the transmission drive controller, a start rotation control signal sent by the engine controller based on the request signal includes:
receiving, by the transmission drive controller, the start rotation control signal sent by the engine controller after receiving a drive switch request signal and determining that the driving speed of the vehicle is less than a drive speed threshold.

Optionally, the differential lock is in an unlocked state, the differential lock control signal is a differential lock locking control signal, and the differential lock drive current control signal is a differential lock locking current control signal;
the receiving, by the transmission drive controller, a control signal sent by the engine controller based on the request signal includes:
receiving, by the transmission drive controller, a differential lock locking control signal sent by the engine controller based on the differential lock switch request signal;
the controlling the drive current in the coil of the differential lock according to the differential lock control signal and the differential lock drive current control signal includes:
controlling the drive current in the coil of the differential lock to a current value corresponding to the differential lock locking current control signal according to the differential lock locking control signal.

Optionally, the differential lock is in a locked state, the differential lock control signal is a differential lock unlocking control signal, and the differential lock drive current control signal is a differential lock unlocking current control signal;
the receiving, by the transmission drive controller, a control signal sent by the engine controller based on the request signal includes:
receiving, by the transmission drive controller, a differential lock unlocking control signal sent by the engine controller based on the differential lock switch request signal;
the controlling the drive current in the coil of the differential lock according to the differential lock control signal and the differential lock drive current control signal includes:
controlling the drive current in the coil of the differential lock to a current value corresponding to the differential lock unlocking current control signal according to the differential lock unlocking control signal.

Optionally, the method further includes: starting timing, by the engine controller, after the vehicle differential lock is in a locked state and when it is determined that the driving speed of the vehicle is greater than the holding current speed threshold, and sending a differential lock adjustment current control signal to the transmission drive controller after the timing duration reaches a preset duration; and
reducing, by the transmission drive controller, the drive current in the coil of the differential lock according to the differential lock adjustment current control signal.

Optionally, the vehicle further includes an in-vehicle display apparatus; the method further includes: sending, by the transmission drive controller, a feedback signal to the engine controller after the transfer case is switched to the target drive mode and/or after the differential lock is switched to the target differential lock mode, wherein the drive mode includes any one of a two-wheel drive mode, a four-wheel drive mode and a low-speed four-wheel drive mode, and the target differential lock mode includes any one of front axle unlocking, front axle locking, rear axle unlocking and rear axle locking;
sending, by the engine controller, a display signal of the target drive mode and/or the target differential lock mode to the in-vehicle display apparatus according to the feedback signal; and
displaying, by the in-vehicle display apparatus, indication information of the target drive mode and/or the target differential lock mode according to the display signal of the target drive mode and/or the target differential lock mode.

Optionally, the method further includes: sending, by the transmission drive controller, a fault signal of the transfer case and/or the differential lock to the engine controller when the transmission drive controller determines that the transfer case and/or the differential lock is faulty;
sending, by the engine controller, a display signal indicating that the transfer case is faulty and/or the differential lock is faulty to the in-vehicle display apparatus according to the fault signal of the transfer case and/or the differential lock; and
displaying, by the in-vehicle display apparatus, the indication information indicating that the transfer case is faulty and/or the differential lock is faulty according to the display signal indicating that the transfer case is faulty and/or the differential lock is faulty.

In the present application, the transmission drive controller is a newly developed controller that integrates the software of the transfer case controller and the software of the differential lock controller, as well as a high-current drive circuit, thereby reducing the number of control chips, further reducing the wiring harnesses that need to be connected, and simplifying communication between control chips. Specifically, the engine controller is configured to acquire a request signal, and send a control signal to the transmission drive controller according to the request signal. When the request signal is a drive switch request signal, the control signal includes a motor rotation control signal and a motor drive current control signal; when the request signal is a differential lock switch request signal, the control signal includes a differential lock control signal and a differential lock drive current control signal; the transmission drive controller is configured to control the motor of the transfer case to rotate to a target position according to the motor rotation control signal and the motor drive current control signal when the received control signal includes a motor rotation control signal and a motor drive current control signal; and the transmission drive controller is further configured to control the drive current in the coil of the differential lock according to the differential lock control signal and the differential lock drive current control signal when the received control signal includes a differential lock control signal and a differential lock drive current control signal. The transfer case and the differential lock are controlled by the transmission drive controller, and the engine controller does not need to be modified. Since the engine controller is an integrated chip that cannot be easily modified, the modification cost can be reduced by using the transmission drive controller.

The embodiments of the present application also provide a corresponding electronic device and a computer storage medium for implementing the solutions provided in the embodiments of the present application.

The electronic device includes a memory and a processor, wherein the memory is configured to store signals or codes, and the processor is configured to execute the signals or codes, such that the computing device performs the method of any embodiment of the present application.

The computer storage medium stores codes, and when the codes are executed, the computing device executing the codes performs the method of any embodiment of the present application.

"First" and "second" in the names such as "first" and "second" (if any) mentioned in the embodiments of the present application are only used as name identifiers and do not represent the first or second in order.

Through the description of the above implementation manners, it can be known that those skilled in the art can clearly understand that all or part of the steps in the method of the above embodiment can be implemented by software plus a general hardware platform. Based on such an understanding, the technical solution of the present application can be embodied in the form of a software product, and the computer software product can be stored in the storage medium, such as a read-only memory (ROM)/RAM, a magnetic disk, an optical disk, etc., including a number of signals for a computer device (which can be a personal computer, a server, or a network communication device such as a router) to perform the method of each embodiment of the present application or some parts of the embodiments.

Each embodiment in this specification is described in a progressive manner, and the same or similar parts between the embodiments can be referred to each other, and each embodiment focuses on the differences from other embodiments. In particular, for the apparatus embodiment, since it is basically similar to the method embodiment, the description is relatively simple, and the relevant parts can be referred to part of the description of the method embodiment. Some or all of the modules can be selected according to actual needs to achieve the purpose of the solution of this embodiment. Those skilled in the art can understand and implement the embodiments without any creative effort.

## Claims

1. A vehicle, **characterized by** comprising a transfer case, a differential lock, an engine controller, and a transmission drive controller;
wherein the engine controller is configured to acquire a request signal;
the engine controller is configured to send a control signal to the transmission drive controller according to the request signal, wherein when the request signal is a drive switch request signal, the control signal includes a motor rotation control signal and a motor drive current control signal; and when the request signal is a differential lock switch request signal, the control signal includes a differential lock control signal and a differential lock drive current control signal;
the transmission drive controller is configured to control a motor of the transfer case to rotate to a target position according to the motor rotation control signal and the motor drive current control signal when the received control signal includes the motor rotation control signal and the motor drive current control signal; and
the transmission drive controller is also configured to control the drive current in a coil of the differential lock according to the differential lock control signal and the differential lock drive current control signal when the received control signal includes the differential lock control signal and the differential lock drive current control signal.

2. The vehicle according to claim 1, wherein the motor rotation control signal includes a start rotation control signal and a stop rotation control signal;
the engine controller is configured to send the start rotation control signal to the transmission drive controller according to the drive switch request signal;
the transmission drive controller is configured to control the motor of the transfer case to start rotating according to the start rotation control signal and the motor drive current control signal, and feed a rotation position back to the engine controller;
the engine controller is configured to send a stop rotation control signal to the transmission drive controller when it is determined that the rotation position is a target position corresponding to a target drive mode according to the corresponding relationship between the position and the drive mode; and
the transmission drive controller is configured to control the motor of the transfer case to stop rotating according to the stop rotation control signal.

3. The vehicle according to claim 2, wherein the engine controller is further configured to acquire the driving speed of a vehicle; and
the engine controller is configured to send the start rotation control signal to the transmission drive controller after receiving the drive switch request signal and determining that the driving speed of the vehicle is less than a drive speed threshold.

4. The vehicle according to claim 1, wherein the differential lock is in an unlocked state, the differential lock control signal is a differential lock locking control signal, and the differential lock drive current control signal is a differential lock locking current control signal;
the engine controller is configured to send the differential lock locking control signal to the transmission drive controller according to the differential lock switch request signal; and
the transmission drive controller is configured to control the drive current in the coil of the differential lock to a current value corresponding to the differential lock locking current control signal according to the differential lock locking control signal.

5. The vehicle according to claim 1, wherein the differential lock is in a locked state, the differential lock control signal is a differential lock unlocking control signal, and the differential lock drive current control signal is a differential lock unlocking current control signal;
the engine controller is configured to send the differential lock unlocking control signal to the transmission drive controller according to the differential lock switch request signal; and
the transmission drive controller is configured to control the drive current in the coil of the differential lock to a current value corresponding to the differential lock unlocking current control signal according to the differential lock unlocking control signal.

6. The vehicle according to claim 4, wherein the engine controller is further configured to start timing after the vehicle differential lock is in a locked state and when it is determined that the driving speed of the vehicle is greater than a holding current speed threshold, and send a differential lock adjustment current control signal to the transmission drive controller after the timing duration reaches a preset duration; and
the transmission drive controller is configured to reduce the drive current in the coil of the differential lock according to the differential lock adjustment current control signal.

7. The vehicle according to claim 1, wherein the vehicle further comprises an in-vehicle display apparatus;
wherein the transmission drive controller is further configured to send a feedback signal to the engine controller after the transfer case is switched to a target drive mode and/or the differential lock is switched to a target differential lock mode, the drive mode includes any one of a two-wheel drive mode, a four-wheel drive mode and a low-speed four-wheel drive mode, and the target differential lock mode includes any one of front axle unlocking, front axle locking, rear axle unlocking and rear axle locking;
the engine controller is further configured to send a display signal of the target drive mode and/or the target differential lock mode to the in-vehicle display apparatus according to the feedback signal; and
the in-vehicle display apparatus is configured to display indication information of the target drive mode and/or the target differential lock mode according to the display signal of the target drive mode and/or the target differential lock mode.

8. The vehicle according to claim 1, wherein the vehicle further comprises an in-vehicle display apparatus;
wherein the transmission drive controller is further configured to send a fault signal of the transfer case and/or the differential lock to the engine controller when it is determined that the transfer case and/or the differential lock is faulty;
the engine controller is further configured to send a display signal indicating that the transfer case is faulty and/or the differential lock is faulty to the in-vehicle display apparatus according to the fault signal of the transfer case and/or the differential lock; and
the in-vehicle display apparatus is configured to display indication information indicating that the transfer case is faulty and/or the differential lock is faulty according to the display signal indicating that the transfer case is faulty and/or the differential lock is faulty.

9. The vehicle according to any one of claims 1-8, wherein the transmission drive controller and the engine controller are connected via a controller local area network.

10. A vehicle control method, **characterized in that** the vehicle control method is applied to a vehicle, and the vehicle includes a transfer case, a differential lock, an engine controller, and a transmission drive controller, and the method comprises:
receiving, by the transmission drive controller, a control signal sent by the engine controller based on a request signal; wherein when the request signal is a drive switch request signal, the control signal includes a motor rotation control signal and a motor drive current control signal; and when the request signal is a differential lock switch request signal, the control signal includes a differential lock control signal and a differential lock drive current control signal;
controlling, by the transmission drive controller, a motor of the transfer case to rotate to a target position according to the motor rotation control signal and the motor drive current control signal when the transmission drive controller determines that the received control signal includes the motor rotation control signal and the motor drive current control signal; and
controlling, by the transmission drive controller, the drive current in a coil of the differential lock according to the differential lock control signal and the differential lock drive current control signal when the transmission drive controller determines that the received control signal includes the differential lock control signal and the differential lock drive current control signal.

11. An electronic device, comprising a memory and a processor,
wherein the memory is configured to store signals or codes, and the processor is configured to execute the signals or codes, such that the electronic device performs the method according to claim 10.

12. A computer storage medium, wherein codes are stored in the computer storage medium, and when the codes are executed, an electronic device executing the codes performs the method according to claim 10.
